Europäisches Patentamt

European Patent Office

Office européen des brevets

(11) Publication number: **0 214 957**
**B1**

# EUROPEAN PATENT SPECIFICATION

(45) Date of publication of patent specification: **13.09.89**

(51) Int. Cl.⁴: **F 01 K 15/00**

(21) Application number: **84902832.9**

(22) Date of filing: **20.06.84**

(86) International application number:
**PCT/SE84/00231**

(87) International publication number:
**WO 86/00371 16.01.86 Gazette 86/02**

(54) **Pressure pulser.**

(43) Date of publication of application:
**25.03.87 Bulletin 87/13**

(45) Publication of the grant of the patent:
**13.09.89 Bulletin 89/37**

(84) Designated Contracting States:
**DE FR GB NL SE**

(56) References cited:
**DE-A-2 402 557**

(73) Proprietor: **WIGRAM, Stig**
**Nationsgatan 16**
**S-223 63 Lund (SE)**

(72) Inventor: **WIGRAM, Stig**
**Nationsgatan 16**
**S-223 63 Lund (SE)**

(74) Representative: **Rostovanyi, Peter et al**
**AWAPATENT AB Box 5117**
**S-200 71 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a pressure pulser.

Natural energy flows are rather common. In all, they contain enormous quantities of energy.

Under certain conditions, these flows hold sufficient intensity of energy to make them directly usable (water falls or rapids, continuously windswept passes, volcanic areas).

Generally, the intensity is far too low, however, unless converted:

—by concentration, e.g. focusing sun rays;

—by adding high-quality energy, e.g. electricity for heat pumps;

by (slowly) increasing energy potentials to predetermined levels, from which instantaneous pulses can be extracted.

The hydraulic ram which transforms the kinetic energy of relatively large quantities of streaming water to high-intensity pulses is one, well-known application of the last-mentioned alternative.

The object of the invention is to provide a pulser adapted to convert low-quality pressure energy into high energy pulses.

According to the invention, this object is achieved by means of a pulser having the features recited in the accompanying claims.

A (minor) temperature span is an energy source which is most complicated to convert, but also the one that contains most energy—at least in the temperate zones, where solar heat is in abundance and the relative coldness required to create the temperature span can be extracted from ground water. If the pulser is used for pumping puposes, this extraction can be performed without loss of said water. The following description exemplifies this use of the inventive principle.

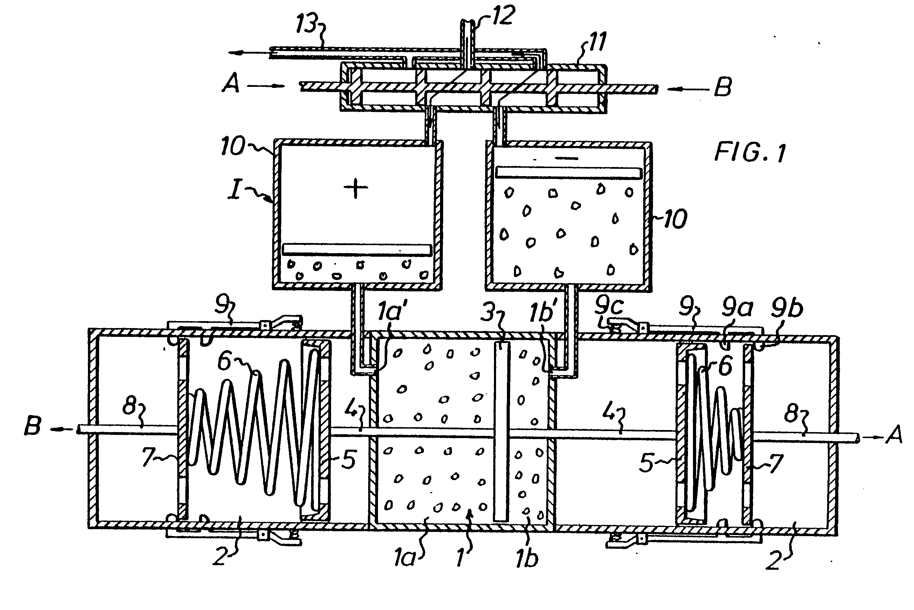

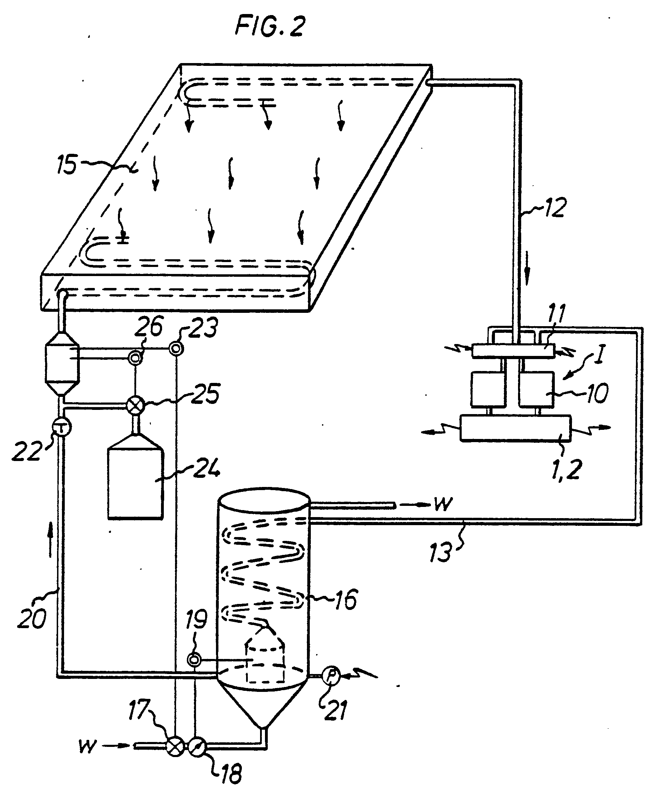

The description is made with reference to the accompanying drawings in which Fig. 1 is a part sectional view of a pulser according to the invention, and Fig. 2 illustrates an evaporator-condenser system including the pulser according to the invention.

Reference is now made to Fig. 1. The pulser I comprises a cylindrical casing whose interior is divided by means of sealing transverse partitions into a central pressure chamber 1 for a fluid, such as oil, and two terminal spring compartments 2. A piston 3 divides the pressure chamber 1 into two spaces 1a, 1b between which a considerable pressure difference may prevail in operation.

On either side of the piston 3 is fixed one end of a rod 4 which sealingly extends through the associated transverse partition and which at its other end in the associated spring compartment 2 is fixed to a second, pierced piston 5 which by means of a spring 6 attached to it, here a conccal helical spring, is connected to another pierced piston 7 disposed in the spring compartment. On its other side, the piston 7 is connected to a piston rod 8 through which is driven a power engine, such as a pump. The piston rod 8 or piston 7 also controls a valve mechansim described in greater detail hereinbelow.

A lever 9 pivotally mounted on the other side of the casing of the pulser and extending in the longitudinal direction of this casing is provided on one lever arm with two lugs 9a, 9b which are spaced apart in the longitudinal direction of the casing and extend into the spring compartment 2 through slots therein, under the load exerted by a spring 9c acting on the other arm of the lever 9. The lug 9b is the rear lug, counting from the pressure chamber 1. The lugs 9a, 9b are designed with cam surfaces controlling the movement of the pistons 5 and 7 against the action of the spring 9c. The cam surfaces are such that the rear lug 9b allows the piston 7 to pass in both directions, while the forward lug 9a does not allow the piston 7 to pass in the direction of the pressure chamber 1 but allows the piston 5 to slide up on it, during which slide engagement the rear lug 9b allow the piston 7 to pass in the outward direction. The piston 7 cannot pass the lug 9b until the piston 5 has slid up on the lug 9a.

Said spaces of the pressure chamber are in fluid communication by in(out) lets 1a', 1b' with one chamber of a respective piston and cylinder assembly 10 whose other chambers, by said valve mechanism designated 11, are alternately connectable to a pressure fluid source, for instance an evaporator, through an inlet conduit 12, and pressure fluid receiving means, e.g. a condenser, through an outlet conduit 13. To this end, the illustrated valve mechanism 11 is a two-position 4-way valve which thus alternately pressurizes and depressurizes said second chambers of the piston and cylinder assemblies 10. The switching of the valve mechanism 11 between the pressurizing state for one assembly 10 and the depressurizing state for the other assembly 10 is carried out, as mentioned above, by means of the piston rod 8 (or piston 7) through any suitable transmission. As mentioned above, the fluid in said spaces of the pressure chamber and said first chambers of the piston and cylinder assemblies is oil.

The pulser now described operates in the following manner. The pressure fluid source 12 pressurizes the piston and cylinder assembly 10 selected by the valve mechanism 11, the pressure is transmitted to the associated space in the pressure chamber 1 and is progressively built up so as to compress the spring 6 between the pistons 5 and 7 to such an extent that the piston 5 is urged up on the lug 9a. This lug and the lug 9b connected to it are then pressed radially outwardly away from the spring compartment 2, such that the lug 9b is disengaged from the piston 7 which under the action of the energy potential built up in the spring 6 by the compression thereof performs a pulse stroke A forwards such that the piston 8 can perform a working stroke in/ for its power engine. As mentioned above, the pulse stroke also switches the valve mechanism 11, by a suitable transmission, for pressurizing the other piston and cylinder assembly 10 and despressurizing the piston and cylinder sssembly 10 previously pressurized, whereby the piston 3 moves in the opposite direction for building up an energy potential releasable as a pulse B, in the other spring 6. The first-mentioned spring 6, now relieved from pressure, then pulls its piston 7 in between the associated lugs 9a and 9b and is stretched. Said transmission may be, for instance, a lever system adapted to be actuated by the lifting of the lever 9 as the piston 7 moves up on the cam lug 9b, and adapted to then displace the valve member, here a slide, of the illustrated valve mechanism 11.

Thus, this construction is a double-acting generator of high-energy pulses produced by low-energy potentials slowly built up in the pressure chamber 1.

The following text will deal with an evaporator/condenser system comprising the pulser I as above.

The evaporator here is a solar collector and the energy pulses emitted by the pulser can be used e.g. for driving a ground water pump, for instance of the hydraulic ram type.

The system thus comprises a solar collector 15 which is connected to a condenser 16 by a conduit 12, 13 in which the pulser I (Fig. 1) is connected, which for pulse emission in the above-described manner is actuated by the working fluid, e.g. freon, evaporated in the solar collector. The working fluid is condensed in the condenser 16 by means of cooling liquid, for instance water w, wholse inlet to the condenser comprises a stop valve 17 and, downstream thereof, a control valve 18. The control valve is affected by the pressure in the condenser by means of a pressure sensor 19 in such a manner that an increasing pressure in the condenser entails increasing flow of cooling liquid. In the return conduit 20 from the condenser to the solar collector, there is connected a return pump 21 also driven by pulses which by a suitable transmission are derived from the pulses emitted by the pulser I. The energy is used to an increased extent if the working fluid to the condenser (in the conduit 13) is subjected to heat exchange with the working fluid from the condenser (in the conduit 20).

In the return conduit 20 downstream of a non-return valve 22, there is further connected a pressure monitor 23 for the pressure in the solar collector, which monitor is adapted to close the stop valve 17 if said pressure falls below a predetermined value and to open the valve 17 when the prsssure exceeds a predetermined value. An auxiliary container 24 for compensating for leakage of working fluid is also connected to the return conduit over a stop valve 25 which is opened by a signal from a monitor 26 for insufficient pressure in combination with the set working temperature in the evaporator.

The system starts and stops fully automatically, being controlled only by the supply of solar energy to the solar collector. If the amount of solar energy supplied is not capable of building up the pressure in the pressure chamber 1 required for pulse release, the movement of the pistons in the pulser I is interrupted. If the pressure then drops, for instance because of a temperature decrease in the working fluid, a certain reversed movement of the piston 3 is had until a new position of equilibrium thereof has been obtained. When the temperature of the working fluid in the solar collector and, thus, the pressure therein increases again, the pistons will also resume their movement in the interrupted direction.

The invention is of course not restricted to the embodiment of the pulser now described. Anyone of ordinary skill in the art realizes that means other than mechanical ones, such as pistons and springs, can be used for building up and releasing high-energy pulses, such as hydraulic and pneumatic means, and that the driving fluid for the pulser may be other than the working fluid in an evaporator/condenser system, that the pulser may be of the single-acting type (one spring 9 less powerful than the other), and that the piston and cylinder assemblies cn be dispensed with, such that the working fluid will act directly on the piston 3.

The pulser can be used for driving a pump, as stated above, in which case the pistons 5, 7 are connected to each other by means of rods and stops restricting the separation of the pistons 5, 7 to a predetermined spacing, but also for achieving e.g. high pressures in gaseous or aqueous media, for obtaining high temperatures or obtaining electric pulses of short duration but of high intensity, these applications being easily realized by the expert without an inventive efforts.

## Claims

1. Pressure pulser for converting low-quality energy in a fluid into high-energy pulses, characterized in that it comprises a chamber (1) which is divided in a fluid-tight manner by a movable member (3) yielding to pressure and which on the respective sides of the pressure yielding member has first and second openings (1a', 1b'), each opening alternatively functioning as inlet (1a') for a fluid whose energy content should be converted and as outlet (1b') for a fluid having a lower energy content, the first opening functioning as inlet while the second is functioning as outlet and vice versa, said openings being subjected to the influence of a valve device (11) for switching the inlet and outlet functions, the pressure-yielding member (3) communicating with a pressure accumulator (6) on one side of the member (3), said accumulator (6) being adapted in response to a fluid pressure increase on the other side of the member (3) to build up, against the action of a bias (9c), a predetermined quantity of energy and, by suppression of said bias, release this quantity of energy as a short energy pulse, said pressure accumulator (6) is connected to the valve device (11) for switching between said inlet and outlet functions.

2. Pulser as claimed in claim 1, characterized in that the pressure accumulator consists of a spring (6).

3. Pulser as claimed in claim 2, characterized in that the pressure-yielding member (3) is rigidly connected to the spring which has an abutment (7) on which the bias (9) acts.

4. Pulser as claimed in claim 3, characterized in that the spring (6) is disposed between and fixed on two pistons (5, 7), one (5) of which is connected by means of a rod (4) to the pressure-yielding member (3) and which are arranged for sliding in an extension of the chamber, two interconnected spring-biased cam means (9a, 9b) longitudinally spaced apart extending through the peripheral boundary wall of said extension.

5. Pulser as claimed in any one of claims 1—4, characterized in that it is of the double-acting type.

6. The use of a pulser as claimed in any one of claims 1—5 for operating a pump or other power engine by means of the working fluid in an evaporator/condenser system where the evaporator is a solar collector or means for recovering residual heat.

**Patentansprüche**

1. Druckpulsiervorrichtung zur Umwandlung von geringwertiger Energie eines Fluids in hochwertige Energieimpulse, gekennzeichnet durch eine Kammer (1), die in fluiddichter Weise von einem beweglichen, drucknachgiebigen Glied (3) geteilt ist und auf jeder von dessen Seiten ersten und zweite Öffnungen (1a', 1b') aufweist, von denen jede Öffnung alternativ als Einlass (1a') für ein Fluid tätig ist, dessen Energieinhalt umgewandelt werden soll, und als Auslass (1b') für ein Fluid mit niedrigerem Energieinhalt, derart, dass die erste Öffnung als Einlass tätig ist, wenn die zweite Als Auslass tätig ist, und umgekehrt, wobie die genannten Öffnungen unter der Einwirkung einer das Wechseln zwischen den Einlass- und Auslassfunktionen bewerkstelligenden Ventileinrichtung (11) stehen, und wobei das drucknachgiebige Glied (3) mit einem auf seiner einen Seite vorgesehenen Druckspeicher (6) in Verbindung steht, der unter der Einwirkung einer auf der anderen Seite des Glieds (3) stattfindenden Fluiddrucksteigerúng entgegen der Wirkung einer Vorspannung (9c) eine vorbestimmte Energiemenge aufbaut und durch Unterdrückung der genannten Vorspannung diese Energiemenge in Form eines kurzen Energieimpulses freigibt, wobei der Druckspeicher (6) zum Wechseln zwischen den genannten Einlass- und Auslassfunktionen an die Ventileinrichtung (11) angeschlossen ist.

2. Pulsiervorrichtung nach Anspruch 1, dadurch gekennzeichnet, dass der Druckspeicher eine Feder (6) ist.

3. Pulsiervorrichtung nach Anspruch 2, dadurch gekennzeichnet, dass das drucknachgiebige Glied (3) mit der Feder starr verbunden ist, die einen von der Vorspannung (9) betätigten Anschlag (7) aufweist.

4. Pulsiervorrichtung nach Anspruch 3, dadurch gekennzeichnet, dass die Feder (6) zwischen zwei Kolben (5, 7) eingespannt und an diesen befestigt ist, von denen der eine (5) mittels einer Stange (4) mit dem drucknachgiebigen Glied (3) verbunden ist, und die beide in einer Verlängerung der Kammer gleiten, wobei sich zwei miteinander verbundene, federbelastete und in Längsrichtung voneinander abliegende Nockenglieder durch die aussenseitige Begrenzungswand der genannten Verlängerung erstrecken.

5. Pulsiervorrichtung nach einem der Ansprüche 1—4, dadurch gekennzeichnet, dass sie des doppeltwirkenden Typs ist.

6. Anwendung einer Pulsiervorrichtung nach einem der Ansprüche 1—5 zum Betrieb einer Pumpe oder anderen Kraftmaschine mittels des Arbeitsfluids in einem Verdampfer/Kondensatorsystems, in dem der Verdampfer ein Sonnenwärme-Kollektor oder ein Mittel zur Rückgewinnung von Restwärme ist.

**Revendications**

1. Pulseur à pression destiné à convertir l'énergie de faible valeur d'un fluide en des impulsions à énergie de grande valeur, caractérisé par le fait qu'il comporte une chambre (1) qui est divisée de manière étanche aux fluides par un élément déplaçable (3) cédant à la pression, et qui présente, aménagées de part et d'autre dudit élément cédant à la pression, des première et seconde ouvertures (1a', 1b') chacune desquelles sert alternativement d'entrée (1a') d'un fluide dont la teneur en énergie doit être convertie, et de sortie (1b') d'un fluide à plus faible teneur en énergie, la première ouverture servant d'entrée lorsque la seconde ouverture sert de sortie et inversement, lesdites ouvertures étant soumises à l'action d'un dispositif à vanne (11) de changement entre lesdites fonctions d'entrée et de sortie, ledit élément (3) cédant à la pression étant relié à un accumulateur de pression (6) prévu d'un côte dudit élément (3) et destiné, en fonction d'une augmentation de la pression de fluide de l'autre côté dudit élément (3), à établir, contre l'action d'une précharge (9c), une quantité d'énergie prédéterminée et, en supprimant ladite précharge, à dégager cette quantité d'énergie comme une impulsion d'énergie de courte durée, ledit accumulateur de pression (6) étant relié audit dispositif à vanne (11) pour permettre le changement entre lesdites fonctions d'entrée et de sortie.

2. Pulseur selon la revendication 1, caractérisé par le fait que l'accumulateur de pression est constitué d'un ressort (6).

3. Pulseur selon la revendication 2, caractérisé par le fait que l'élément (3) cédant à la pression est relié rigidement audit ressort que présente un butée (7) sur laquelle agit précharge (9).

4. Pulseur selon la revendication 3, caractérisé par le fait que le ressort (6) est disposé entre et fixé à deux pistons (5, 7) dont l'un (5) est relié par une tige (4) à l'élément (3) cédant à la pression, et qui sont destinés à glisser dans un prolongement de ladite chambre, deux éléments à came (9a, 9b) reliés l'un à l'autre, espacés en sens longitudinal et soumis à l'action d'un ressort s'étendant à travers la paroi péripherique délimitant ledit prolongement.

5. Pulseur selon l'une quelconque des revendications 1 à 4, caractérisé par le fait qu'il est du type à double effet.

6. L'emploi d'un pulseur selon l'une quelconque des revendications 1 à 5 pour commander une pompe ou autre machine motrice au moyen du fluide de service d'un évaporateur/système à condenseur où l'évaporateur est un collecteur solaire ou un moyen de récupération de chaleur résiduelle.

FIG.1

## FIG. 2